# EUROPEAN PATENT SPECIFICATION

(11) **EP 2 653 986 B1**
(45) Date of publication and mention of the grant of the patent: **14.06.2017**
(21) Application number: 13001987.0
(22) Date of filing: 16.04.2013
(51) Int. Cl.: G06F 17/30

(54) **Client-side caching of a database transaction token.**
Clientseitiges Caching vom Datenbanktransaktionstoken.
Mise en cache côté client de jeton de transaction de base de données.

(30) Priority: 17.04.2012 US 201213449099
(43) Date of publication of application: 23.10.2013
(73) Proprietor: SAP SE, 69190 Walldorf (DE)
(72) Inventor: Lee, Juchang, 69190 Walldorf (DE); Noh, Jaeyun, 69190 Walldorf (DE); Lee, Chulwon, 69190 Walldorf (DE); Muehle, Michael, 69190 Walldorf (DE); Schroeder, Alexander, 69190 Walldorf (DE); Paskamp, Marco, 69190 Walldorf (DE); Cha, Sang Kyun, 69190 Walldorf (DE)
(74) Representative: Müller-Boré & Partner Patentanwälte PartG mbB

(56) References cited:
- FLAVIO JUNQUEIRA ET AL: "Lock-free transactional support for large-scale storage systems", DEPENDABLE SYSTEMS AND NETWORKS WORKSHOPS (DSN-W), 2011 IEEE/IFIP 41ST INTERNATIONAL CONFERENCE ON, IEEE, 27 June 2011 (2011-06-27), pages 176-181, XP031902936, DOI: 10.1109/DSNW.2011.5958809 ISBN: 978-1-4577-0374-4
- Ralf Schenkel ET AL: "Federated Transaction Management with Snapshot Isolation" In: "Transactions and Database Dynamics", 1 January 2000 (2000-01-01), Springer Berlin Heidelberg, Berlin, Heidelberg, XP055103358, ISBN: 978-3-54-067201-2 vol. 1773, pages 1-25, DOI: 10.1007/3-540-46466-2_1, * the whole document * *

## Description

### BACKGROUND

According to conventional database systems, transactions are used to retrieve data from a database or to insert, update or delete records of the database. In a distributed database system, each of two or more database nodes may execute respective transactions in parallel, and/or a single transaction may affect data located on more than one database node. Distributed database systems therefore employ transaction management techniques.

Document "Lock-free transactional support for large-scale storage system" by Flavio Junqueira et al., DEPENDABLE SYSTEMS AND NETWORKS WORKSHOPS, 2011, pages 176-181, ISBN: 978-1-4577-0374-4 discloses a method for transactional support comprising snapshot isolation, i.e. assigning two timestamps to each transaction, one before reading and one before committing the modified data. The database maintains multiple versions of the data and the transactions observe different versions of the data depending on their starting time.

### BRIEF DESCRIPTION OF THE DRAWINGS

FIG. 1 is a block diagram of a system according to some embodiments.
FIG. 2 illustrates multi-version concurrency control according to some embodiments.
FIG. 3 is a sequence diagram according to some embodiments.
FIG. 4 is a block diagram illustrating operation of a system according to some embodiments.
FIG. 5 is a block diagram illustrating operation of a system according to some embodiments.
FIG. 6 is a block diagram illustrating operation of a system according to some embodiments.
FIG. 7 is a block diagram illustrating operation of a system according to some embodiments.
FIG. 8 is a block diagram illustrating operation of a system according to some embodiments.
FIG. 9 is a block diagram illustrating operation of a system according to some embodiments.
FIG. 10 is a block diagram illustrating operation of a system according to some embodiments.
FIG. 11 is a block diagram of a hardware system according to some embodiments.

### DETAILED DESCRIPTION

The following description is provided to enable any person in the art to make and use the described embodiments. Various modifications, however, will remain readily apparent to those in the art.

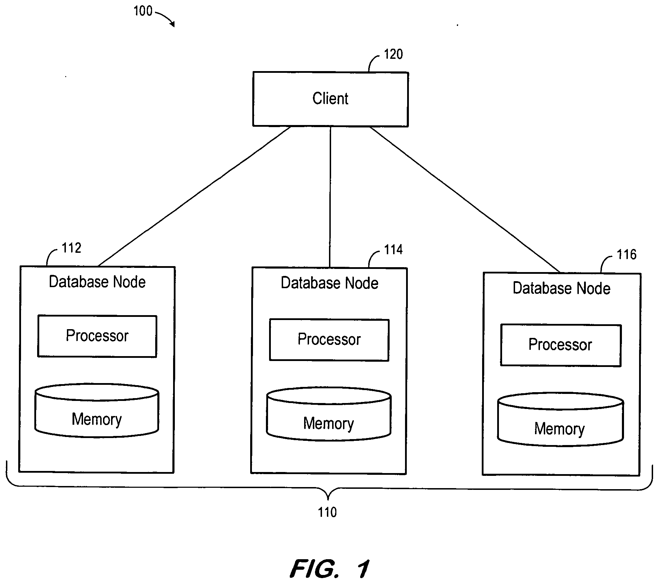

FIG. 1 is a block diagram of system 100. System 100 represents a logical architecture for describing some embodiments, and actual implementations may include more, fewer and/or different components arranged in any manner. The elements of system 100 may represent software elements, hardware elements, or any combination thereof. For example, system 100 may be implemented using any number of computing devices, and one or more processors within system 100 may execute program code to cause corresponding computing devices to perform processes described herein.

Generally, each logical element described herein may be implemented by any number of devices coupled via any number of public and/or private networks. Two or more of such devices may be located remote from one another and may communicate with one another via any known manner of network(s) and/or via a dedicated connection.

System 100 includes database instance 110, which is a distributed database including database nodes 112, 114 and 116. Each of database nodes 112, 114 and 116 includes at least one processor and a memory device. The memory devices of database nodes 112, 114 and 116 need not be physically segregated as illustrated in FIG. 1, rather, FIG. 1 is intended to illustrate that each of database nodes 112, 114 and 116 is responsible for managing a dedicated portion of physical memory, regardless of where that physical memory is located. The data stored within the memories of database nodes 112, 114 and 116, taken together, represent the full database of database instance 110.

In some embodiments, the memory of database nodes 112, 114 and 116 is implemented in Random Access Memory (e.g., cache memory for storing recently-used data) and one or more fixed disks (e.g., persistent memory for storing their respective portions of the full database). Alternatively, one or more of nodes 112, 114 and 116 may implement an "in-memory" database, in which volatile (e.g., non-disk-based) memory (e.g., Random Access Memory) is used both for cache memory and for storing its entire respective portion of the full database. In some embodiments, the data of the full database may comprise one or more of conventional tabular data, row-based data, column-based data, and object-based data. Database instance 100 may also or alternatively support multi-tenancy by providing multiple logical database systems which are programmatically isolated from one another.

According to some embodiments, database nodes 112, 114 and 116 each execute a database server process to provide the full data of database instance to database applications. More specifically, database instance 110 may communicate with one or more database applications executed by client 120 over one or more interfaces (e.g., a Structured Query Language (SQL)-based interface) in order to provide data thereto. Client 120 may comprise one or more processors and memory storing program code which is executable by the one or more processors to cause client 120 to perform the actions attributed thereto herein.

Client 120 may thereby comprise an application server executing database applications to provide, for example, business reporting, inventory control, online shopping, and/or any other suitable functions. The database applications may, in turn, support presentation applications executed by end-user devices (e.g., desktop computers, laptop computers, tablet computers, smartphones, etc.). Such a presentation application may simply comprise a Web browser to access and display reports generated by a database application.

The data of database instance 110 may be received from disparate hardware and software systems, some of which are not interoperational with one another. The systems may comprise a back-end data environment employed in a business or industrial context. The data may be pushed to database instance 110 and/or provided in response to queries received therefrom.

Database instance 110 and each element thereof may also include other unshown elements that may be used during operation thereof, such as any suitable program code, scripts, or other functional data that is executable to interface with other elements, other applications, other data files, operating system files, and device drivers. These elements are known to those in the art, and are therefore not described in detail herein.

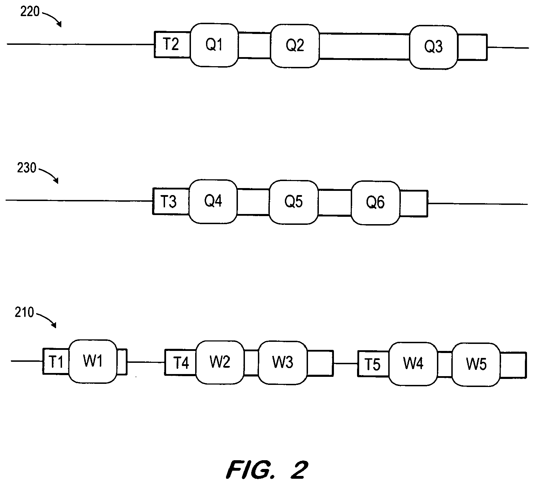

FIG. 2 illustrates multi-version concurrency control according to some embodiments. Each of connections 210, 220 and 230 represents a database connection initiated by a client device. For example, each of connections 210, 220 and 230 may represent a connection initiated by a respective client device.

Each transaction T# of each of connections 210, 220 and 230 is terminated in response to an instruction to commit the transaction. Accordingly, a transaction may include one or more write or query statements before an instruction to commit the transaction is issued. Each query statement "sees" a particular snapshot of the database instance at a point in time, which may be determined based on the read mode of the statement's associated connection.

For purposes of the FIG. 2 example, connection 210 only includes write statements and therefore its read mode is irrelevant. Connection 220 is assumed to run in "RepeatableRead" mode or "Serializable" mode and connection 230 is assumed to run in "ReadCommitted" mode. Generally, each statement in a ReadCommitted-mode transaction sees a snapshot of the database based on the statement's timestamp, while each statement in a RepeatableRead-mode or Serializable-mode transaction sees a same snapshot of the database.

As a result of the foregoing assumptions, statements Q1, Q2 and Q3 of transaction T1 each see the result of statement W1, and statements Q4 and Q5 of transaction T3 also see the result of statement W1. Statement Q6 of transaction T3, on the other hand, sees the result of statements W1, W2 and W3.

As described in commonly-assigned U.S. Application Serial No. 12/898,633 (Atty Docket no. 2010P00461US), the particular snapshot seen by a statement/transaction may be governed by a "transaction token" in some embodiments. A transaction token, or snapshot timestamp, is assigned on each statement or transaction by a transaction coordinator (e.g., a master database node). A write transaction creates update versions and updates a transaction token when committed. A garbage collector also operates to merge or delete update versions according to a collection protocol. Under such an implementation, each statement in a ReadCommitted-mode transaction may be associated with its own transaction token, while each statement in a RepeatableRead-mode or Serializable-mode transaction may be associated with a same transaction token.

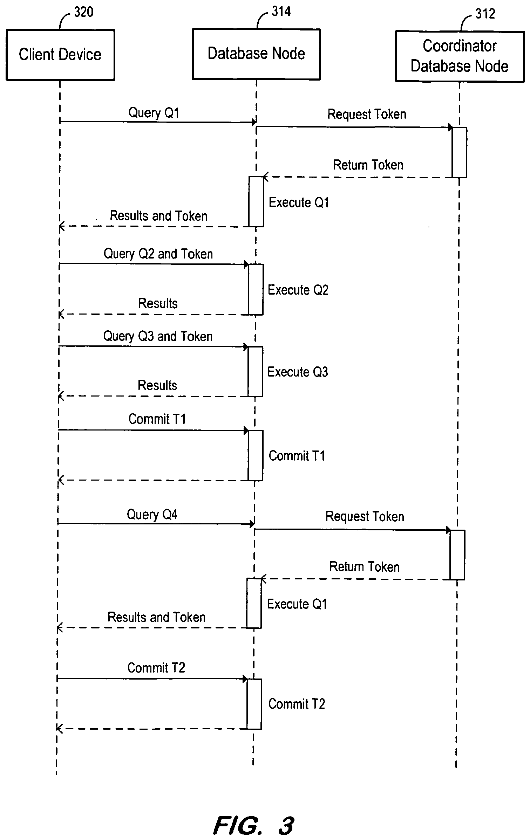

FIG. 3 is a sequence diagram according to some embodiments. Each illustrated step may be embodied in processor-executable program code read from one or more non-transitory computer-readable media, such as a floppy disk, a CD-ROM, a DVD-ROM, a Flash drive, a fixed disk and a magnetic tape, and then stored in a compressed, uncompiled and/or encrypted format. Accordingly, a processor of any suitable device or devices may execute the program code to cause the device or devices to operate as described. In some embodiments, hard-wired circuitry may be used in place of, or in combination with, program code for implementation of processes according to some embodiments. Embodiments are therefore not limited to any specific combination of hardware and software.

Initially, a query Q1 is received by database node 314 from client device 320. As is known in the art, the query may be pre-compiled for execution by database node 314, or may conform to any suitable compilable query language that is or becomes known, such as, for example, SQL. Database node 314 may comprise a database node of a distributed database as described with respect to FIG. 1.

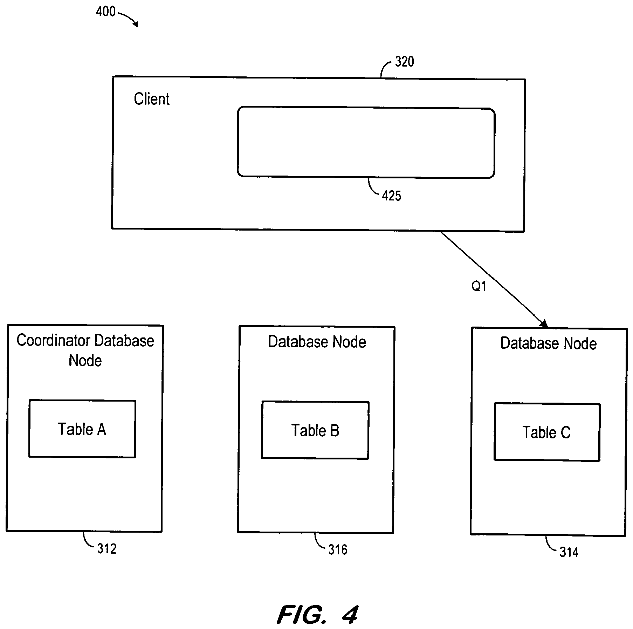

FIG. 4 illustrates system 400 including client 320 and database node 314 according to some embodiments. System 400 also includes coordinator database node 312 and database node 316. Each illustrated database node manages a respective database table, A, B or C. As shown, database node 314 receives query Q1 from client 320.

Query Q1 is associated with a particular transaction (i.e., transaction T1). The transaction may be initiated by database node 314 in response to reception of query Q1 or may have been previously-initiated. Similarly, client 320 may open a connection with database node 314 prior to transmission of query Q1.

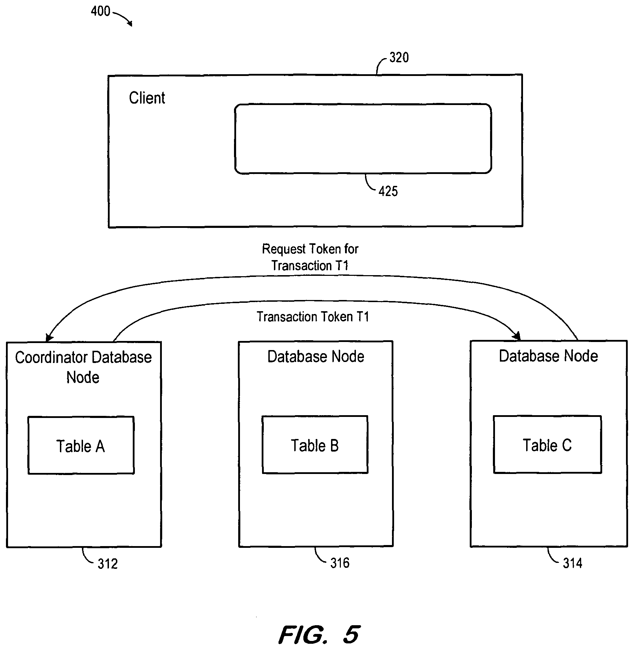

Returning to FIG. 3, database node 314 requests a transaction token associated with the transaction from coordinator database node 312. This request is illustrated in FIG. 5. Coordinator database node 312 is simply a database node which is responsible for providing transaction tokens as described above, and may be implemented by a master database node of a distributed database. The requested token is returned to database node 314 as also illustrated in FIG. 3.

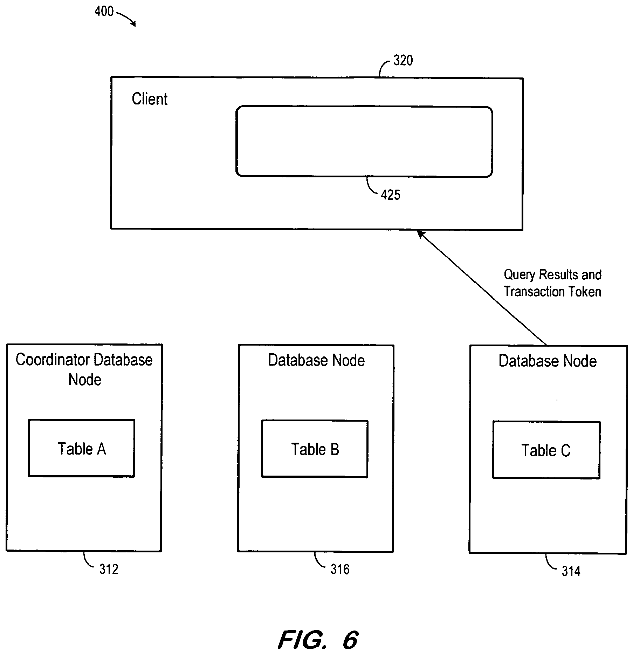

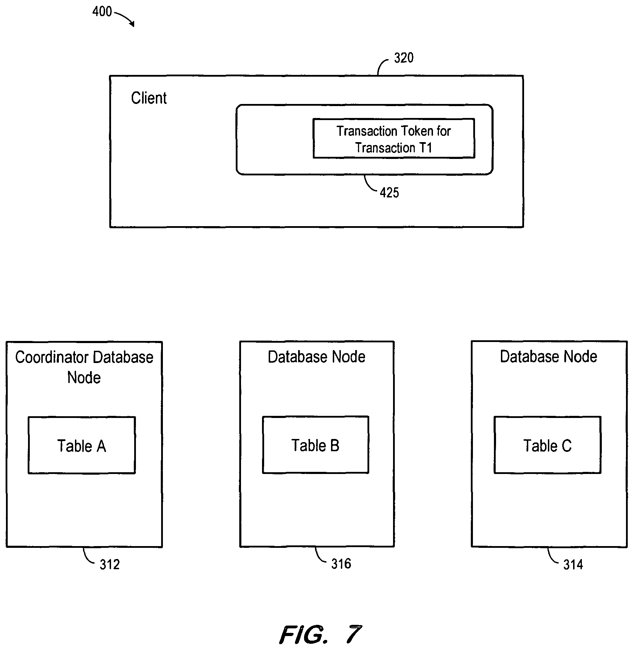

Having received the transaction token, database node 314 may execute query Q1 based on the snapshot timestamp indicated by the transaction token. Execution of query Q1 generates query results which are transmitted to client 320. As noted in FIG. 3 and illustrated in FIG. 6, the transaction token is also transmitted to client 320 along with the query results. The transaction token is stored at client 320. In some embodiments, the token is stored in library 425 (e.g., an SQLDBC client library) of client device 320 as shown in FIG. 7.

Client device 320 then transmits query Q2 and the stored transaction token to database node 314. In this regard, query Q2 is also associated with transaction T1 and is intended to view a same snapshot as viewed by query Q1. In some embodiments, queries Q1 and Q2 are executed in RepeatableRead mode or Serializable mode as described above.

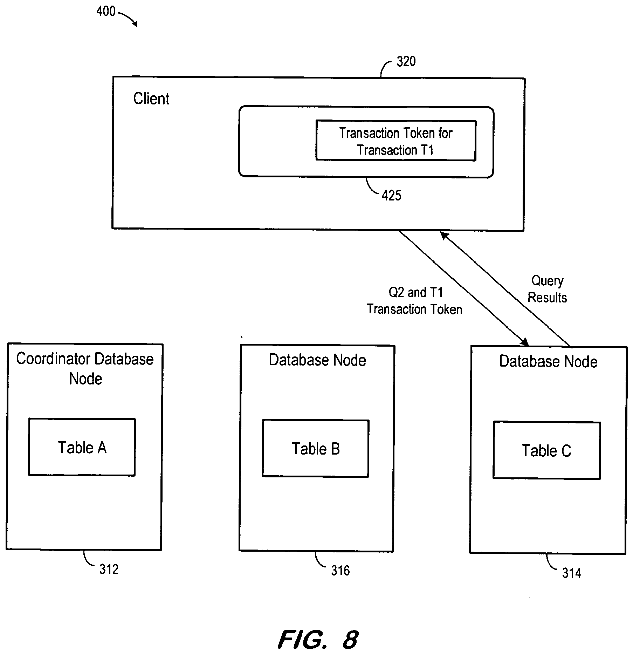

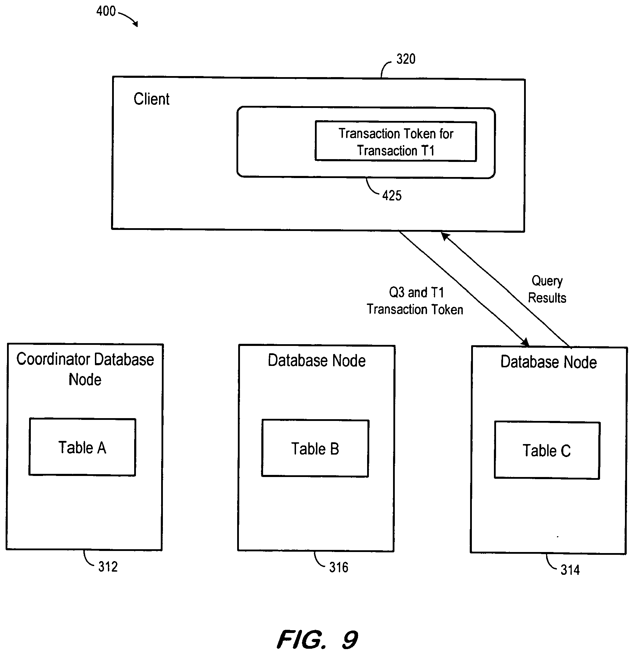

Since database node 314 now possesses a suitable transaction token for query Q2, node 314 may, in some embodiments, execute query Q2 without having to request a token from coordinator database node 312. Accordingly, query Q2 is executed in view of the received token and the results are returned to client 320 as illustrated in FIG. 8. FIGS. 3 and 9 further illustrate the execution of query Q3, which occurs as described with respect to query Q2.

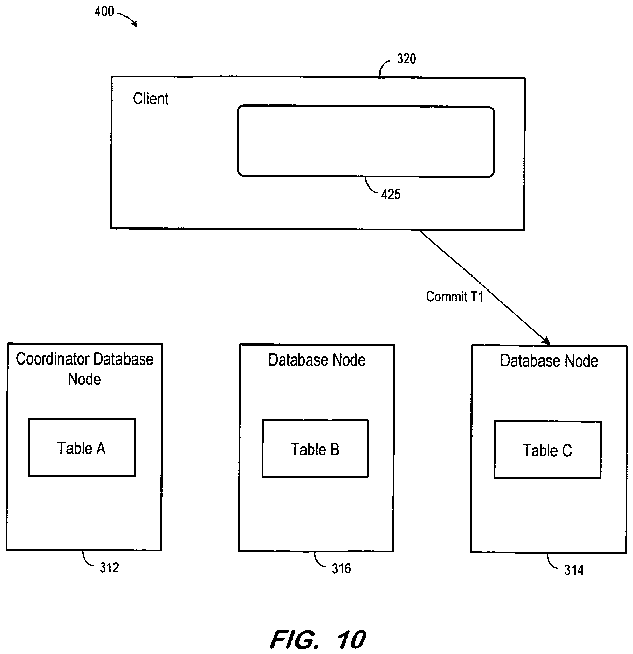

Client device 320 then transmits an instruction to commit transaction T1 as illustrated in FIG 10. As also illustrated, and according to some embodiments, transmission of this instruction also includes deletion of the associated transaction token from local storage 425 of client device 320. Embodiments are not limited to deletion of the associated transaction token; the token may be otherwise invalidated (e.g., via an invalidation flag, etc.).

FIG. 3 further illustrates the reception of query Q4 of transaction T2. As described above, database node 314 requests a token corresponding to transaction T2 from coordinator node 312, which is returned to client device 320 along with query results. Unlike transaction T1 described above, transaction T2 includes only one query, therefore the token corresponding to transaction T2 is not transmitted back to database node 314 prior to committing transaction T2.

According to some embodiments, client device 320 may store tokens associated with more than one ongoing transaction. For example, client device 320 may store a token associated with a transaction instantiated on database node 314 and a token associated with a transaction instantiated on database node 316 of system 400. If a database node supports more than one contemporaneous transaction, then client device 320 may store a token associated with each contemporaneous transaction instantiated on the database node.

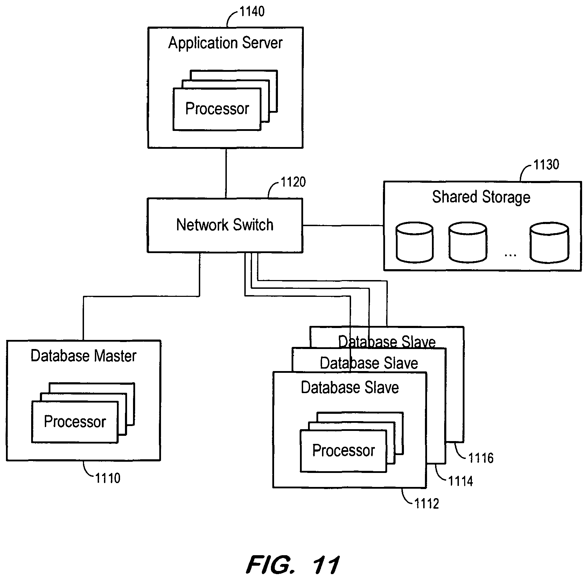

FIG. 11 is a block diagram of system 1100 according to some embodiments. System 1100 illustrates one hardware architecture implementing system 100 and/or 400 as described above, but implementations of either system 100 or 400 are not limited thereto. Elements of system 1100 may therefore operate to execute methods as described above.

Database master 1110 and each of database slaves 1112, 1114 and 1116 may comprise a multi-processor "blade" server. Each of database master 1110 and database slaves 1112, 1114 and 1116 may operate as described herein with respect to database nodes, and database master 1110 may perform additional transaction coordination functions and other master server functions which are not performed by database slaves 1112, 1114 and 1116 as is known in the art.

Database master 1110 and database slaves 1112, 1114 and 1116 are connected via network switch 1120, and are thereby also connected to shared storage 1130. Shared storage 1130 and all other memory mentioned herein may comprise any appropriate non-transitory storage device, including combinations of magnetic storage devices (e.g., magnetic tape, hard disk drives and flash memory), optical storage devices, and Read Only Memory (ROM) devices, etc.

Shared storage 1130 may comprise the persistent storage of a database instance distributed among database master 1110 and database slaves 1112, 1114 and 1116. As such, various portions of the data within shared storage 1130 may be allotted (i.e., managed by) one of database master 1110 and database slaves 1112, 1114 and 1116.

Application server 1140 may also comprise a multi-processor blade server. Application server 1140, as described above, may execute database applications to provide functionality to end users operating user devices.

## Claims

1. A method implemented by a computing system, wherein the computing system includes a client device (320) and a database instance (110) including a first database node (314) and a coordinator database node (312), each database node (312, 314) including at least one processor and a memory device, and wherein each database node (312, 314) manages a respective database table, the method comprising:
receiving a first query of a first transaction from the client device (320) at the first database node (314) of the database instance (110), wherein:
each transaction of a database connection initiated by the client device (320) is terminated in response to an instruction to commit the transaction and a transaction includes one or more query statements before an instruction to commit the transaction is issued, and each query statement sees a particular snapshot of the database instance (110) at a point in time, which is determined based on the read mode of the database connection associated with the query statement;
requesting, by the first database node (314), a first transaction token associated with the first transaction from the coordinator database node (312), wherein the first transaction token indicates a snapshot timestamp; receiving the first transaction token from the coordinator database node (312) at the first database node (314);
executing the first query at the first database node (314) based on the snapshot timestamp indicated by the first transaction token to generate first results;
transmitting the first results and the first transaction token from the first database node (314) to the client device (320);
storing the first transaction token in the client device (320);
transmitting the first transaction token and a second query associated with the first transaction from the client device (320) to the first database node (314);
receiving the first transaction token and the second query at the first database node (314);
executing the second query at the first database node (314) based on the snapshot timestamp indicated by the first transaction token to generate second results; and
transmitting the second results from the first database node (314) to the client device (320).

2. A method according to Claim 1, further comprising:
transmitting an instruction to commit the first transaction from the client device (320) to the first database node (314);
committing the first transaction at the first database node (314);
receiving a first query of a second transaction from the client device (320) at the first database node (314);
requesting a second transaction token associated with the second transaction from the coordinator database node (312);
receiving the second transaction token from the coordinator database node (312) at the first database node (314);
executing the second query at the first database node (314) to generate second results; and
transmitting the second results and the second transaction token from the first database node (314) to the client device (320).

3. A method according to Claim 2, further comprising:
in response to transmitting the instruction, invalidating the first transaction token at the client device (320).

4. A method according to any one of the preceding claims, further comprising:
transmitting an instruction to commit the first transaction from the client device (320) to the first database node (314); and
in response to transmitting the instruction, invalidating the first transaction token at the client device (320).

5. A non-transitory medium storing computer-executable program code, the program code executable by a computing device to perform operations according to any one of the preceding claims.

6. A system comprising:
a client device (320) comprising a processor and a memory; and
a database instance (110) comprising:
a first database node (314) comprising a first processor and a first memory;
a coordinator database node (312) comprising a second processor and a second memory, the first database node (314) to:
receive a first query of a first transaction from the client device (320), wherein:
each transaction of a database connection initiated by the client device (320) is terminated in response to an instruction to commit the transaction and a transaction includes one or more query statements before an instruction to commit the transaction is issued, and each query statement sees a particular snapshot of the database instance (110) at a point in time, which is determined based on the read mode of the database connection associated with the query statement;
request a first transaction token associated with the first transaction from the coordinator database node (312), wherein the first transaction token indicates a snapshot timestamp; receive the first transaction token from the coordinator database node (312);
execute the first query based on the snapshot timestamp indicated by the first transaction token to generate first results; and
transmit the first results and the first transaction token to the client device (320);
the client device (320) to:
store the first transaction token; and
transmit the first transaction token and a second query associated with the first transaction to the first database node (314); and
the first database node (314) to further:
receive the first transaction token and the second query;
execute the second query based on the snapshot timestamp indicated by the first transaction token to generate second results; and
transmit the second results to the client device (320).

7. A system according to Claim 6, the client device (320) further to:
transmit an instruction to commit the first transaction to the first database node (314); and
the first database node (314) further to:
commit the first transaction;
receive a first query of a second transaction from the client device (320);
request a second transaction token associated with the second transaction from the coordinator database node (312);
receive the second transaction token from the coordinator database node (312);
execute the second query to generate second results; and
transmit the second results and the second transaction token to the client device (320).

8. A system according to claim 7, the client device (320) further to:
in response to transmission of the instruction, invalidate the first transaction token.

9. A system according to any one of claims 6 to 8, the client device (320) further to:
transmit an instruction to commit the first transaction to the first database node (314); and
in response to transmission of the instruction, invalidate the first transaction token.

## Patentansprüche

1. Verfahren, implementiert durch ein Rechensystem, wobei das Rechensystem eine Client-Vorrichtung (320) und eine Datenbankinstanz (110) enthält, die einen ersten Datenbankknoten (314) und einen Koordinator-Datenbankknoten (312) enthält, wobei jeder Datenbankknoten (312, 314) zumindest einen Prozessor und eine Speichervorrichtung enthält, und wobei jeder Datenbankknoten (312, 314) eine jeweilige Datenbanktabelle verwaltet, wobei das Verfahren umfasst:
Empfangen einer ersten Abfrage einer ersten Transaktion von der Client-Vorrichtung (320) an dem ersten Datenbankknoten (314) der Datenbankinstanz (110), wobei:
jede Transaktion einer Datenbankverbindung, die von der Client-Vorrichtung (320) initiiert wird, ansprechend auf eine Instruktion zum Ausführen der Transaktion beendet wird und eine Transaktion eine oder mehrere Abfrageanweisungen enthält, bevor eine Instruktion zum Ausführen der Transaktion ausgegeben wird, und wobei jede Abfrageanweisung einen bestimmten Snapshot der Datenbankinstanz (110) zu einem Zeitpunkt sieht, der basierend auf dem Lesemodus der Datenbankverbindung bestimmt wird, die mit der Abfrageanweisung assoziiert bzw. verknüpft ist;
Anfragen bzw. Anfordern, durch den ersten Datenbankknoten (314), eines ersten Transaktions-Token, der mit der ersten Transaktion assoziiert bzw. verknüpft ist, von dem Koordinator-Datenbankknoten (312), wobei der erste Transaktions-Token einen Snapshot-Zeitstempel angibt;
Empfangen des ersten Transaktions-Token von dem Koordinator-Datenbankknoten (312) an dem ersten Datenbankknoten (314);
Ausführen der ersten Abfrage an dem ersten Datenbankknoten (314) basierend auf dem Snapshot-Zeitstempel, der von dem ersten Transaktions-Token angegeben wird, um erste Ergebnisse zu generieren;
Übertragen der ersten Ergebnisse und des ersten Transaktions-Token von dem ersten Datenbankknoten (314) an die Client-Vorrichtung (320);
Speichern des ersten Transaktions-Token in der Client-Vorrichtung (320);
Übertragen des ersten Transaktions-Token und einer zweiten Abfrage, die mit der ersten Transaktion assoziiert bzw. verknüpft ist, von der Client-Vorrichtung (320) an den ersten Datenbankknoten (314);
Empfangen des ersten Transaktions-Token und der zweiten Abfrage an dem ersten Datenbankknoten (314);
Ausführen der zweiten Abfrage an dem ersten Datenbankknoten (314) basierend auf dem Snapshot-Zeitstempel, der von dem ersten Transaktions-Token angegeben wird, um zweite Ergebnisse zu generieren; und
Übertragen der zweiten Ergebnisse von dem ersten Datenbankknoten (314) an die Client-Vorrichtung (320).

2. Verfahren nach Anspruch 1, ferner umfassend:
Übertragen einer Instruktion zum Ausführen der ersten Transaktion von der Client-Vorrichtung (320) an den ersten Datenbankknoten (314);
Ausführen der ersten Transaktion an dem ersten Datenbankknoten (314);
Empfangen einer ersten Abfrage einer zweiten Transaktion von der Client-Vorrichtung (320) an dem ersten Datenbankknoten (314);
Anfragen bzw. Anfordern eines zweiten Transaktions-Token, der mit der zweiten Transaktion assoziiert bzw. verknüpft ist, von dem Koordinator-Datenbankknoten (312);
Empfangen des zweiten Transaktions-Token von dem Koordinator-Datenbankknoten (312) an dem ersten Datenbankknoten (314);
Ausführen der zweiten Abfrage an dem ersten Datenbankknoten (314), um zweite Ergebnisse zu generieren; und
Übertragen der zweiten Ergebnisse und des zweiten Transaktions-Token von dem ersten Datenbankknoten (314) an die Client-Vorrichtung (320).

3. Verfahren nach Anspruch 2, ferner umfassend:
ansprechend auf das Übertragen der Instruktion, Entwerten bzw. Ungültigmachen des ersten Transaktions-Token an der Client-Vorrichtung (320).

4. Verfahren nach einem der vorhergehenden Ansprüche, ferner umfassend:
Übertragen einer Instruktion zum Ausführen der ersten Transaktion von der Client-Vorrichtung (320) an den ersten Datenbankknoten (314); und
ansprechend auf das Übertragen der Instruktion, Entwerten bzw. Ungültigmachen des ersten Transaktions-Token an der Client-Vorrichtung (320).

5. Nicht flüchtiges Medium, das computerausführbaren Programmcode speichert, wobei der Programmcode von einer Rechenvorrichtung ausführbar ist, um Operationen nach einem der vorhergehenden Ansprüche durchzuführen.

6. System, umfassend:
eine Client-Vorrichtung (320), die einen Prozessor und einen Speicher umfasst; und
eine Datenbankinstanz (110), umfassend:
einen ersten Datenbankknoten (314), der einen ersten Prozessor und einen ersten Speicher umfasst;
einen Koordinator-Datenbankknoten (312), der einen zweiten Prozessor und einen zweiten Speicher umfasst, wobei der erste Datenbankknoten (314) ist zum:
Empfangen einer ersten Abfrage einer ersten Transaktion von der Client-Vorrichtung (320), wobei:
jede Transaktion einer Datenbankverbindung, die von der Client-Vorrichtung (320) initiiert wird, ansprechend auf eine Instruktion zum Ausführen der Transaktion beendet wird und eine Transaktion eine oder mehrere Abfrageanweisungen enthält, bevor eine Instruktion zum Ausführen der Transaktion ausgegeben wird, und wobei jede Abfrageanweisung einen bestimmten Snapshot der Datenbankinstanz (110) zu einem Zeitpunkt sieht, der basierend auf dem Lesemodus der Datenbankverbindung bestimmt wird, die mit der Abfrageanweisung assoziiert bzw. verknüpft ist;
Anfragen bzw. Anfordern eines ersten Transaktions-Token, der mit der ersten Transaktion assoziiert bzw. verknüpft ist, von dem Koordinator-Datenbankknoten (312), wobei der erste Transaktions-Token einen Snapshot-Zeitstempel angibt;
Empfangen des ersten Transaktions-Token von dem Koordinator-Datenbankknoten (312);
Ausführen der ersten Abfrage basierend auf dem Snapshot-Zeitstempel, der von dem ersten Transaktions-Token angegeben wird, um erste Ergebnisse zu generieren; und
Übertragen der ersten Ergebnisse und des ersten Transaktions-Token an die Client-Vorrichtung (320);
wobei die Client-Vorrichtung (320) ist zum:
Speichern des ersten Transaktions-Token; und
Übertragen des ersten Transaktions-Token und einer zweiten Abfrage, die mit der ersten Transaktion assoziiert bzw. verknüpft ist, an den ersten Datenbankknoten (314);
wobei der erste Datenbankknoten (314) ferner ist zum:
Empfangen des ersten Transaktions-Token und der zweiten Abfrage;
Ausführen der zweiten Abfrage basierend auf dem Snapshot-Zeitstempel, der von dem ersten Transaktions-Token angegeben wird, um zweite Ergebnisse zu generieren; und
Übertragen der zweiten Ergebnisse an die Client-Vorrichtung (320).

7. System nach Anspruch 6, wobei die Client-Vorrichtung (320) ferner ist zum:
Übertragen einer Instruktion zum Ausführen der ersten Transaktion an den ersten Datenbankknoten (314); und
der erste Datenbankknoten (314) ferner ist zum:
Ausführen der ersten Transaktion;
Empfangen einer ersten Abfrage einer zweiten Transaktion von der Client-Vorrichtung (320);
Anfragen bzw. Anfordern eines zweiten Transaktions-Token, der mit der zweiten Transaktion assoziiert bzw. verknüpft ist, von dem Koordinator-Datenbankknoten (312);
Empfangen des zweiten Transaktions-Token von dem Koordinator-Datenbankknoten (312);
Ausführen der zweiten Abfrage, um zweite Ergebnisse zu generieren; und
Übertragen der zweiten Ergebnisse und des zweiten Transaktions-Token an die Client-Vorrichtung (320).

8. System nach Anspruch 7, wobei die Client-Vorrichtung (320) ferner ist zum:
ansprechend auf das Übertragen der Instruktion, Entwerten bzw. Ungültigmachen des ersten Transaktions-Token.

9. System nach einem der Ansprüche 6 bis 8, wobei die Client-Vorrichtung (320) ferner ist zum:
Übertragen einer Instruktion zum Ausführen der ersten Transaktion an den ersten Datenbahkknoten (314); und
ansprechend auf das Übertragen der Instruktion, Entwerten bzw. Ungültigmachen des ersten Transaktions-Token.

## Revendications

1. Procédé mis en oeuvre par un système informatique, dans lequel le système informatique inclut un dispositif client (320) et une instance de base de données (110) incluant un premier noeud de base de données (314) et un noeud de base de données coordinateur (312), chaque noeud de base de données (312, 314) incluant au moins un processeur et un dispositif de mémoire, et dans lequel chaque noeud de base de données (312, 314) gère une table de base de données respective, le procédé comprenant :
recevoir une première requête d'une première transaction du dispositif client (320) au niveau du premier noeud de base de données (314) de l'instance de base de données (110), dans lequel :
chaque transaction d'une connexion de base de données initiée par le dispositif client (320) est terminée en réponse à une instruction de valider la transaction et une transaction inclut une ou plusieurs déclarations de requête avant qu'une instruction de valider la transaction ne soit émise, et chaque déclaration de requête voit un instantané particulier de l'instance de base de données (110) à un instant qui est déterminé en fonction du mode de lecture de la connexion de base de données associée à la déclaration de requête ;
demander, par le premier noeud de base de données (314), un premier jeton de transaction associé à la première transaction au noeud de base de données coordinateur (312), dans lequel le premier jeton de transaction indique une estampille temporelle d'instantané ;
recevoir le premier jeton de transaction du noeud de base de données coordinateur (312) au niveau du premier noeud de base de données (314) ;
exécuter la première requête au niveau du premier noeud de base de données (314) en fonction de l'estampille temporelle d'instantané indiquée par le premier jeton de transaction pour générer des premiers résultats ;
transmettre les premiers résultats et le premier jeton de transaction du premier noeud de base de données (314) au dispositif client (320) ;
stocker le premier jeton de transaction dans le dispositif client (320) ;
transmettre le premier jeton de transaction et une seconde requête associée à la première transaction du dispositif client (320) au premier noeud de base de données (314) ;
recevoir le premier jeton de transaction et la seconde requête au niveau du premier noeud de base de données (314) :
exécuter la seconde requête au niveau du premier noeud de base de données (314) en fonction de l'estampille temporelle d'instantané indiquée par le premier jeton de transaction pour générer des seconds résultats ; et
transmettre les seconds résultats du premier noeud de base de données (314) au dispositif client (320).

2. Procédé selon la revendication 1, comprenant en outre :
transmettre une instruction de valider la première transaction du dispositif client (320) au premier noeud de base de données (314) ;
valider la première transaction au niveau du premier noeud de base de données (314) ;
recevoir une première requête d'une seconde transaction du dispositif client (320) au niveau du premier noeud de base de données (314) ;
demander un second jeton de transaction associé à la seconde transaction au noeud de base de données coordinateur (312) ;
recevoir le second jeton de transaction du noeud de base de données coordinateur (312) au niveau du premier noeud de base de données (314) ;
exécuter la seconde requête au niveau du premier noeud de base de données (314) pour générer des seconds résultats ; et
transmettre les seconds résultats et le second jeton de transaction du premier noeud de base de données (314) au dispositif client (320).

3. Procédé selon la revendication 2, comprenant en outre :
en réponse à la transmission de l'instruction, invalider le premier jeton de transaction au niveau du dispositif client (320).

4. Procédé selon l'une quelconque des revendications précédentes, comprenant en outre :
transmettre une instruction de valider la première transaction du dispositif client (320) au premier noeud de base de données (314) ; et
en réponse à la transmission de l'instruction, invalider le premier jeton de transaction au niveau du dispositif client (320).

5. Support non transitoire stockant du code de programme pouvant être exécuté par ordinateur, le code de programme pouvant être exécuté par un dispositif informatique pour réaliser des opérations selon l'une quelconque des revendications précédentes.

6. Système comprenant :
un dispositif client (320) comprenant un processeur et une mémoire ; et
une instance de base de données (110) comprenant :
un premier noeud de base de données (314) comprenant un premier processeur et une première mémoire ;
un noeud de base de données coordinateur (312) comprenant un second processeur et une seconde mémoire, le premier noeud de base de données (314) devant :
recevoir une première requête d'une première transaction du dispositif client (320), dans lequel :
chaque transaction d'une connexion de base de données initiée par le dispositif client (320) est terminée en réponse à une instruction de valider la transaction et une transaction inclut une ou plusieurs déclarations de requête avant qu'une instruction de valider la transaction ne soit émise, et chaque déclaration de requête voit un instantané particulier de l'instance de base de données (110) à un instant qui est déterminé en fonction du mode de lecture de la connexion de base de données associée à la déclaration de requête ;
demander un premier jeton de transaction associé à la première transaction au noeud de base de données coordinateur (312), dans lequel le premier jeton de transaction indique une estampille temporelle d'instantané ;
recevoir le premier jeton de transaction du noeud de base de données coordinateur (312) ;
exécuter la première requête en fonction de l'estampille temporelle d'instantané indiquée par le premier jeton de transaction pour générer des premiers résultats ; et
transmettre les premiers résultats et le premier jeton de transaction au dispositif client (320) ;
le dispositif client (320) devant :
stocker le premier jeton de transaction ; et
transmettre le premier jeton de transaction et une seconde requête associée à la première transaction au premier noeud de base de données (314) ; et
le premier noeud de base de données (314) devant en outre :
recevoir le premier jeton de transaction et la seconde requête ;
exécuter la seconde requête en fonction de l'estampille temporelle d'instantané indiquée par le premier jeton de transaction pour générer des seconds résultats ; et
transmettre les seconds résultats au dispositif client (320).

7. Système selon la revendication 6, le dispositif client (320) devant en outre :
transmettre une instruction de valider la première transaction au premier noeud de base de données (314) ; et
le premier noeud de base de données (314) devant en outre :
valider la première transaction ;
recevoir une première requête d'une seconde transaction du dispositif client (320) ;
demander un second jeton de transaction associé à la seconde transaction au noeud de base de données coordinateur (312) ;
recevoir le second jeton de transaction du noeud de base de données coordinateur (312) ;
exécuter la seconde requête pour générer des seconds résultats ; et
transmettre les seconds résultats et le second jeton de transaction au dispositif client (320).

8. Système selon la revendication 7, le dispositif client (320) devant en outre :
en réponse à la transmission de l'instruction, invalider le premier jeton de transaction.

9. Système selon l'une quelconque des revendications 6 à 8, le dispositif client (320) devant en outre :
transmettre une instruction de valider la première transaction au premier noeud de base de données (314) ; et
en réponse à la transmission de l'instruction, invalider le premier jeton de transaction.
